# EUROPEAN PATENT APPLICATION

(11) **EP 3 288 254 A1**
(43) Date of publication of application: **28.02.2018**
(21) Application number: 17000132.5
(22) Date of filing: 27.01.2017
(51) Int. Cl.: H04N 5/232

(54) **MOBILE TERMINAL AND METHOD FOR CONTROLLING THE SAME**

(30) Priority: 25.08.2016 KR 20160108413
(71) Applicant: LG ELECTRONICS INC., Yeongdeungpo-gu Seoul, 07336 (KR)
(72) Inventor: SEOL, Jie, 06772 Seoul (KR); BYUN, Minsoo, 06772 Seoul (KR); LEE, Joowoo, 06772 Seoul (KR); KIM, Soomin, 06772 Seoul (KR)
(74) Representative: Beyer, Andreas

(57) **Abstract**

Disclosed are a mobile terminal capable of executing image capturing, and a method of controlling the same. The mobile terminal includes a terminal body; a plurality of cameras disposed on different regions of the terminal body in a spaced manner, and having different capturing directions; a display unit configured to display video information; and a controller configured to execute a different control in response to a different input applied in a locked state where reception of a user's input is limited, wherein the controller displays a lock screen indicating a locked state, based on a first input received in the locked state, and wherein the controller displays a plurality of preview images received from the plurality of cameras, on the display unit, based on a second input received in the locked state.

## Description

### BACKGROUND OF THE INVENTION

### 1. Field of the Invention

This specification relates to a mobile terminal which is capable of capturing an image, and a method for controlling the same.

### 2. Background of the Invention

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, in the field of a camera for a mobile terminal, various camera-related functions are being developed to satisfy user' needs to execute a camera more rapidly and easily in order to capture moments in the form of still images or moving images (video).

As one of the functions, a function to immediately enter a camera mode in a locked state is being developed in various manners. However, in the case of immediately entering a camera mode in a locked state, a camera having a user's desired capturing direction may not be selected. This may cause a difficulty in satisfying user's needs to capture moments.

### SUMMARY OF THE INVENTION

Therefore, an aspect of the detailed description is to provide a mobile terminal capable of solving a problem that a user cannot select a capturing direction of an activated camera when executing a camera function.

Another aspect of the detailed description is to provide a mobile terminal capable of determining a capturing direction of a camera based on a user's intention.

To achieve these and other advantages and in accordance with the purpose of this specification, as embodied and broadly described herein, there is provided a mobile terminal, including: a terminal body; a plurality of cameras disposed on different regions of the terminal body in a spaced manner, and having different capturing directions; a display unit configured to display video information; and a controller configured to execute a different control in response to a different input applied in a locked state where reception of a user's input is limited, wherein the controller displays a lock screen indicating a locked state, based on a first input received in the locked state, and wherein the controller displays a plurality of preview images received from the plurality of cameras, on the display unit, based on a second input received in the locked state.

In an embodiment, the plurality of cameras may include: a first camera disposed on a front surface of the terminal body, and having a first capturing direction; and a second camera disposed on a rear surface of the terminal body, and having a second capturing direction, and wherein the controller simultaneously displays preview images received from the first and second cameras when the second input is received.

In an embodiment, in a displayed state of a plurality of preview images on the display unit, the controller may simultaneously capture the plurality of preview images in response to a touch input received on an arbitrary region of the display unit.

In an embodiment, the mobile terminal may further include a motion sensor configured to sense a movement of a subject. When the second input is applied, the controller may display, on the display unit, a preview image of a specific camera which is disposed in a direction where a movement of a subject has been sensed, among the plurality of cameras.

In an embodiment, the mobile terminal may further include an eyeline sensor configured to sense a user's eyeline. When the second input is applied, the controller may display, on the display unit, a preview image of a specific camera among the plurality of cameras, based on a user's eyeline direction.

In an embodiment, when the user's eyeline direction is toward a specific camera, the controller may display a preview image of the specific camera on the display unit. When the user's eyeline direction is not toward a specific camera, the controller may display, on the display unit, a preview image of another camera positioned on an opposite side to the specific camera among the plurality of cameras.

In an embodiment, the mobile terminal may further include a gradient sensor configured to sense a gradient of the terminal body. The controller may display, on the display unit, a preview image of a specific camera which is disposed in a direction where the terminal body has been tilted, among the plurality of cameras.

In an embodiment, in a displayed state of a plurality of preview images on the display unit, if a touch input is applied to a boundary region between the preview images, the controller may change a display size of the plurality of preview images.

In an embodiment, when a display size of a preview image among the plurality of preview images is decreased to a value less than a preset size, the controller may control a camera which has transmitted the preview image, such that image information may not be received from the camera which has transmitted the preview image.

In an embodiment, when preview images are captured by the plurality of cameras, the controller may display the captured preview images on the display unit. And the controller may display a guide object on at least one recommended image among the captured preview images, in an overlapped manner.

In an embodiment, for the recommended images, the controller may detect images determined to have moved based on a reference image among the captured preview images, through an image analysis.

In an embodiment, when the plurality of preview images are simultaneously captured, the controller may store the plurality of captured preview images in a memory. In a case where images stored in the memory are output to the display unit, the controller may display the plurality of captured preview images so as to be visually-distinguishable from other images stored in the memory, in order to indicate that the plurality of preview images have been simultaneously captured.

In an embodiment, the controller may display a guide object indicating that the plurality of preview images have been simultaneously captured, in an overlapped manner, on display regions of the plurality of preview images.

In an embodiment, the mobile terminal may further include a wireless communication unit configured to receive an image from an external camera through communication. When the second input is received, the controller may receive a preview image of the external camera through the wireless communication unit, and may display the preview image of the external camera together with the plurality of preview images received from the plurality of cameras.

In an embodiment, if a display size of the preview image of the external camera is reduced to a value less than a preset size, the controller may release a communication connection state with the external camera.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram illustrating a mobile terminal according to the present invention;
FIGS. 1B and 1C are conceptual views illustrating an example of a mobile terminal according to the present invention, which are viewed from different directions;
FIG. 2 is a flowchart illustrating a method of executing a camera capturing function in a mobile terminal according to the present invention;
FIGS. 3A and 3B are conceptual views illustrating an executed state of a camera capturing function, in a locked state;
FIGS. 4A to 4C are conceptual views illustrating image capturing using a camera capturing function;
FIGS. 5A and 5B are conceptual views illustrating a method of setting a camera to be activated according to a condition related to a subject's movement;
FIGS. 6A and 6B are conceptual views illustrating a method of setting a camera to be activated according to a condition related to user's eyeline information;
FIGS. 7A and 7B are conceptual views illustrating a method of setting a camera to be activated according to a condition related to a tilted state of a terminal body;
FIGS. 8A and 8B are conceptual views illustrating a method of controlling a size of a preview image;
FIGS. 9A and 9B are conceptual views illustrating a method of setting a filter of an image;
FIGS. 10A to 10D are conceptual views illustrating a method of storing images captured through a camera capturing function;
FIGS. 11A and 11B are conceptual views illustrating different embodiments to execute a camera capturing function, in a mobile terminal according to the present invention; and
FIGS. 12 to 14B are conceptual views illustrating a method of executing a camera capturing function using image information received from an external camera.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

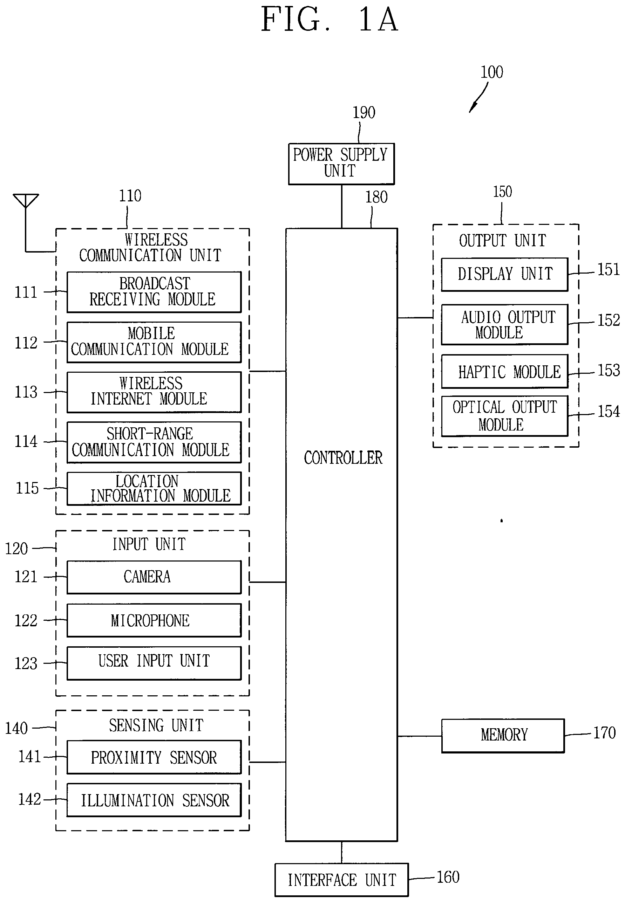

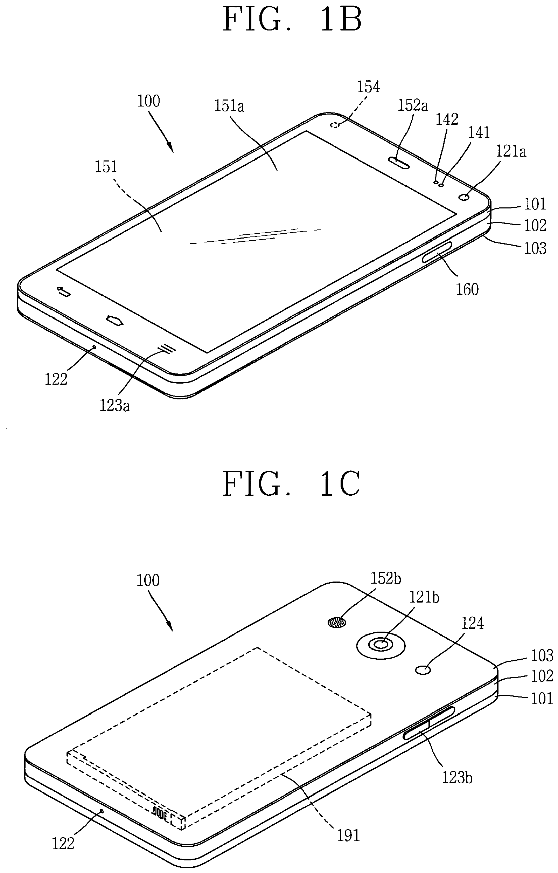

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation ' detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), Long Term Evolution (LTE), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

The mobile terminal including at least one of the aforementioned components may be in a locked state or a released state.

The locked state may mean a state where reception of a user input applied to the mobile terminal is restricted. In the locked state, even if a user input is applied to the mobile terminal, the mobile terminal is not operated. However, the mobile terminal may execute a specific function even in the locked state. For instance, the controller 180 may activate a camera as a camera capturing command is applied, even in the locked state. Such a specific function may be preset when the mobile terminal is manufactured, or may be preset to be executable in a locked state by an application installed to the mobile terminal.

In the locked state, the display unit 151 may be deactivate or activate. The activation of the display unit means a state where video information is displayable on the display unit 151 as light of the display unit 151 is turned on. On the other hand, the deactivation of the display unit means a state where video information is not displayable on the display unit 151 as the light of the display unit 151 is turned off.

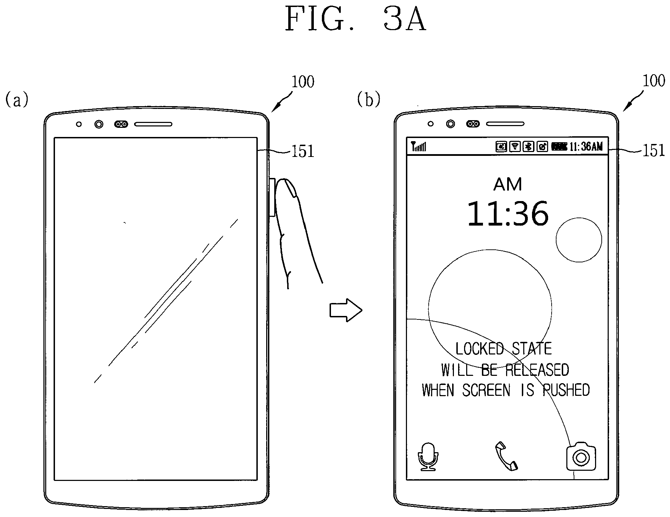

If the display unit 151 is in an activated state, as shown in FIG. 3A(b), the controller 180 may display a lock screen on the display unit 151. The lock screen is screen information displayed on the display unit 151 when the mobile terminal is in a locked state, and may be displayed before the locked state is converted into a released state. The lock screen may include a background image, basic information (e.g., time, date and weather) displayed on the background image, password input information for releasing the locked state, etc.

If a user input to release the locked state is applied onto the lock screen, the controller 180 may convert the locked state into a released state. Here, the user input may be applied through various input manners such as a pattern input, a touch input, a password, an iris recognition, and a fingerprint recognition.

The released state may mean a state where the mobile terminal is operable according to a user input applied to the mobile terminal. In the released state, the controller 180 may execute a proper function in response to a user input.

Once the locked state is converted into the released state, the controller 180 may display a home screen page on the display unit 151. The home screen page is an icon of an application installed to the mobile terminal, or a page including a widget. The home screen page may be called an idle screen, a menu screen, etc.

If a control command for camera capturing is input in a locked state, the controller 180 may execute a camera capturing function without releasing the locked state.

The camera capturing function may be a function to activate the camera 121 provided at the mobile terminal, and to receive image information from the activated camera 121. Alternatively, the camera capturing function may be a function to capture image information received from the activated camera 121 as a still image or a moving image. Here, the activation of the camera 121 means a state where image information (or an image signal) may be received through the camera 121.

The control command for camera capturing may be input in a deactivated state of the display unit 151, or may be input in a state where a lock screen has been displayed on the display unit 151.

If the control command for camera capturing is input in a deactivated state of the display unit 151, the controller 180 may convert a locked state into a released state, and may immediately display a preview image received from the camera without displaying a lock screen on the display unit 151. The preview image may be image information received real time from the camera 121, before an image is captured. With such a configuration, a user may execute a camera capturing function without undergoing a step of activating the display unit 151, a step of converting a locked state into a released state, and a step of executing a camera capturing function. This may allow the user to capture an instantaneous image more quickly.

If the control command for camera capturing is input in a state where a lock screen has been displayed on the display unit 151, the controller 180 may convert a locked state into a released state, and may display an image received from the camera on the display unit 151. That is, even in this state, the controller 180 may immediately execute a camera capturing function without undergoing two steps of converting a locked state into a released state and executing a camera capturing function. Thus, the controller 180 may immediately convert a lock screen into a preview image received from the camera, without displaying, on the display unit 151, a home screen page indicating a released state.

Such a camera capturing function to activate the camera in a locked state of the mobile terminal, without releasing the locked state, may be referred to as a 'quick shot' function. The following camera capturing function means a quick shot function immediately executed in a locked state.

In the conventional art, when a quick shot function is executed, a most-recently activated camera is activated, and image information received from the activated camera is displayed on the display unit 151. This may cause a user not to pre-recognize a capturing direction of an activated camera when the quick shot function is executed, and may cause a problem that a camera of a desired capturing direction may not be activated. That is, in the conventional art, capturing an instantaneous image by a quick shot function may fail.

In order to solve such a problem, the present invention proposes a method of executing a camera capturing function, in a mobile terminal provided with a plurality of cameras having different capturing directions.

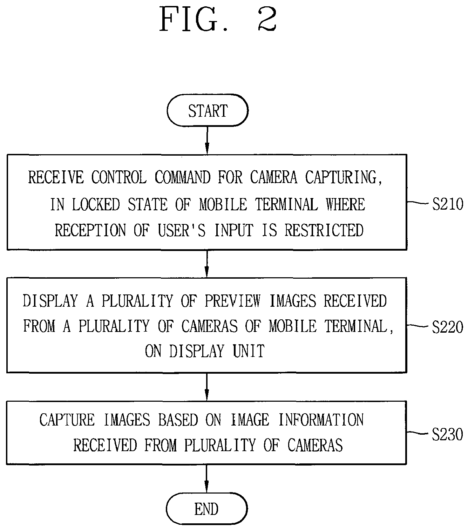

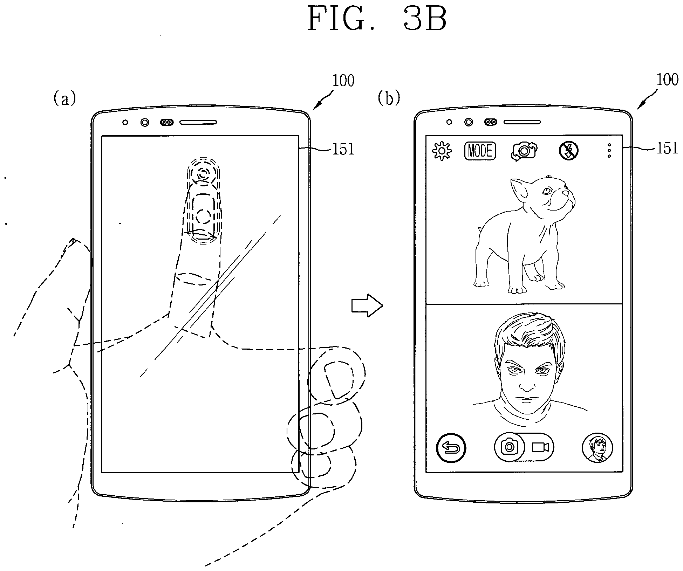

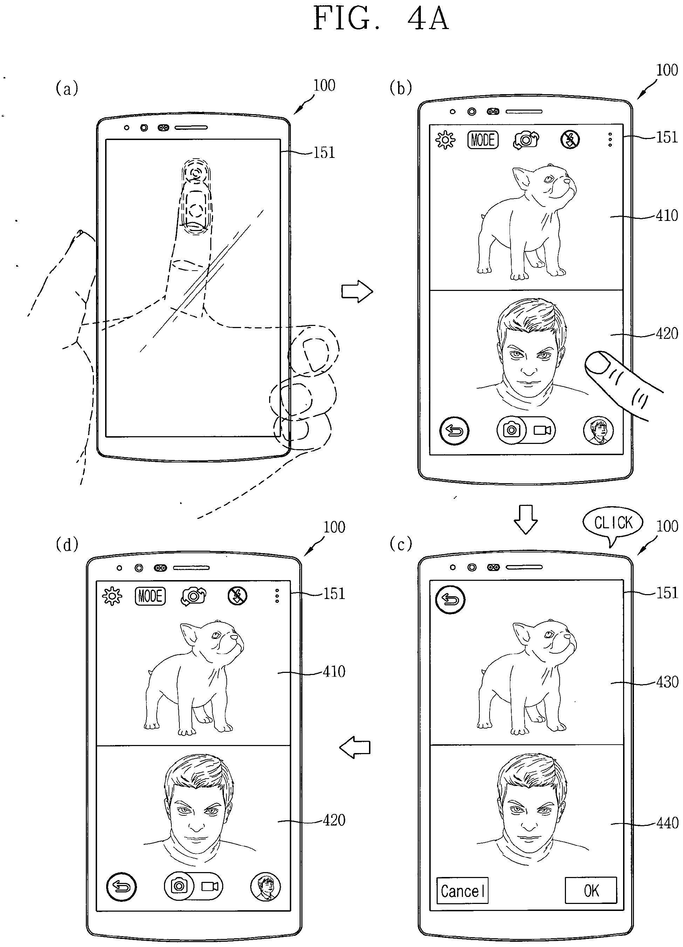

FIG. 2 is a flowchart illustrating a method of executing a camera capturing function in a mobile terminal according to the present invention. FIGS. 3A and 3B are conceptual views illustrating an executed state of a camera capturing function, in a locked state. And FIGS. 4A to 4C are conceptual views illustrating image capturing using a camera capturing function.

Referring to FIG. 2, the controller 180 may receive a control command for camera capturing, in a locked state where reception of a user input is restricted (S210).

In the locked state of the mobile terminal, the controller 180 may receive various user inputs. As aforementioned, the controller 180 may restrict reception of a user input except for a specific user input.

Once a specific user input is applied, the controller 180 may operate the mobile terminal even in a locked state. The specific user input may be a user input for activating the display unit 151, or may be a control command for camera capturing.

For instance, as shown in FIG. 3A(a), if a push input is applied to a button disposed on a side surface of the mobile terminal in a deactivated state of the display unit 151, the controller 180 may activate the display unit 151. Here, if the mobile terminal is in a locked state, the controller 180 may display a lock screen indicating the locked state, on the activated display unit 151.

As another example, as shown in FIG. 3A(b), if a control command for camera capturing is applied in a deactivated state of the display unit 151, the controller 180 may execute a camera capturing function.

That is, if the mobile terminal is in a locked state, the controller 180 may operate the mobile terminal only when a specific user input is applied to the mobile terminal.

Hereinafter, will be explained a case where a control command for camera capturing is applied in a locked state of the mobile terminal.

In a locked state of the mobile terminal, the controller 180 may receive a control command for camera capturing in various manners. The control command for camera capturing may be input through various input manners such as a touch input, a button input and a fingerprint input. For instance, as shown in FIG. 3B(a), the control command for camera capturing may be input in a locked state, through a push input consecutively applied to the rear input unit (refer to FIG. 1C) two times. As another example, the control command for camera capturing may be input through a preset type of touch input applied onto a lock screen.

If the control command for camera capturing is received, the controller 180 may execute a camera capturing function. Once the camera capturing function is executed, the controller 180 may activate a plurality of cameras provided at the mobile terminal such that image information may be received from the plurality of cameras.

The plurality of cameras may be disposed at different regions of a terminal body in a spaced manner from each other. For instance, the mobile terminal may include the front camera 121a disposed on a front surface of the terminal body (refer to FIG. 1B), and the rear camera 121b disposed on a rear surface of the terminal body (refer to FIG. 1C). The plurality of cameras may be disposed on positions different from the positions shown in FIGS. 1B and 1C, which may be determined by a designer.

The plurality of cameras may have different capturing directions. For instance, the front camera 121a may have a first capturing direction, and the rear camera 121b may have a second capturing direction.

The plurality of cameras may include cameras provided at external devices, rather than the cameras provided at the mobile terminal. The external device is an electronic device which may communicate with the mobile terminal in a wired or wireless manner, and may be a drone, a rolling bot, a camera for 360°, etc. In this case, the controller 180 may receive image information from the cameras provided at the external devices, through communication with the external devices.

The controller 180 may activate all of the plurality of cameras, or may activate only a specific camera among the plurality of cameras based on a preset condition.

The preset condition may be one of a condition related to a most-recently executed camera, a condition related to a subject's movement, a condition related to user's eyeline information, and a condition related to a movement of the terminal body.

The condition related to a most-recently executed camera may be a condition related to a camera activated before a control command for camera capturing is received.

The condition related to a subject's movement may be a condition to sense movements of subjects which exist in capturing directions of the plurality of cameras when a control command for camera capturing is applied. For instance, if a subject which exists in a capturing direction of the rear camera 121b moves, the rear camera 121b may be activated. Here, the subject means an object to be captured by the camera, e.g., a man, an animal, a thing, etc.

The condition related to user's eyeline information may be a condition that the camera is positioned in a user's eyeline direction when a control command for camera capturing is applied. For instance, when a user stares at the front camera 121a, the front camera 121a may be activated.

The condition related to a movement of the terminal body may be a condition related to a camera which is disposed in a tilted direction of the terminal body. For instance, if the terminal body is tilted in a direction corresponding to the front camera 121a, the front camera 121a may be activated.

Once the camera capturing function is executed, the controller 180 may display a plurality of preview images received from the plurality of cameras of the mobile terminal, on the display unit (S220).

In an activated state or a deactivated state of the display unit 151, the controller 180 may receive a control command for camera capturing. In an activated state of the display unit 151, a lock screen indicating a locked state may be displayed on the display unit 151.

In the state where the lock screen has been displayed on the display unit 151, if a control command for camera capturing is received, the controller 180 may display image information received from the plurality of activated cameras, on the display unit 151. In this case, the image information displayed on the display unit 151 is called a 'preview image'.

For instance, a plurality of preview images of the same size may be simultaneously displayed on the display unit 151.

Likewise, in a deactivated state of the display unit 151, the controller 180 may receive a control command for camera capturing. In response to the control command for camera capturing, the display unit 151 may be activated. As shown in FIG. 3B(b), the controller 180 may display a plurality of preview images receives from the plurality of cameras, on the activated display unit 151.

The plurality of preview images may be displayed in predetermined sizes, on positions pre-allocated to a plurality of cameras. And the plurality of preview images may be changeable according to a user's manipulation.

Thus, a user may recognize at a glance image information received through the plurality of cameras having different capturing directions, rather than a most-recently executed camera. This may allow the user to capture an image through a camera having a desired capturing direction.

Upon activation of only a specific camera among the plurality of cameras, the controller 180 may display only a preview image received from the specific camera, on the display unit 151.

In the displayed state of the preview image of the specific camera, the controller 180 may display a preview image of another camera where no preview image has been displayed, according to a user's request, together with the preview image of the specific camera. For instance, in a displayed state of preview images of the front and rear cameras 121a, 121b, if a camera provided at a drone requests image information, the controller 180 may display a preview image received from the drone camera on the display unit 151, together with the preview images of the front and rear cameras 121a, 121b.

In the displayed state of the preview images, the controller 180 may capture an image based on the image information received from the plurality of activated cameras (S230).

The captured image may include a still image and a moving image. Alternatively, the captured image may include image information which may be captured through the cameras by various capturing techniques. In the following description, it is assumed that the captured image is a still image. However, in the present invention, the captured image may be a moving image, a cinema-graph image, etc.

After displaying a plurality of preview images on the display unit 151, the controller 180 may capture images corresponding to the plurality of preview images, automatically or according to a capturing request. This may be set by a user. More specifically, before image capturing, a user may set an image to be captured at the same time when a camera capturing function is executed, or may set an image to be captured according to a capturing command after the camera capturing function is executed.

In case of an automatic image capturing, if a control command for camera capturing is received, the controller 180 may display a plurality of preview images on the display unit, and may capture images corresponding to the plurality of preview images.

That is, a user may activate the cameras and at the same time may capture images, without an additional request for image capturing. This may allow the user to capture a moment as an image.

After displaying a plurality of preview images on the display unit 151, the controller 180 may capture images corresponding to the plurality of preview images, in response to a capturing command. The capturing command may be a touch input with respect to a preview image.

For instance, as shown in FIG. 4A(a), the controller 180 may execute a camera capturing function in a locked state, in response to a control command for camera capturing. In this case, as shown in FIG. 4A(b), the controller 180 may simultaneously display preview images of the front and rear cameras 121a, 121b, on the display unit 151.

Then, as shown in FIG. 4A(b), the controller 180 may sense a touch input applied to any region of the display unit 151 where the preview images 410, 420 have been displayed. In this case, as shown in FIG. 4A(c), the controller 180 may capture images 430, 440 corresponding to the preview images 410, 420, in response to the touch input. That is, in response to the touch input, the controller 180 may simultaneously capture the images 430, 440 corresponding to the preview images 410, 420, as separate images. With such a configuration, a user may simultaneously capture images of different directions through a single control input.

Then, as shown in FIG. 4A(d), the controller 180 may re-output the preview images 410, 420 to the display unit 151.

The controller 180 may selectively capture only an image corresponding to a specific preview image among the plurality of preview images displayed on the display unit 151.

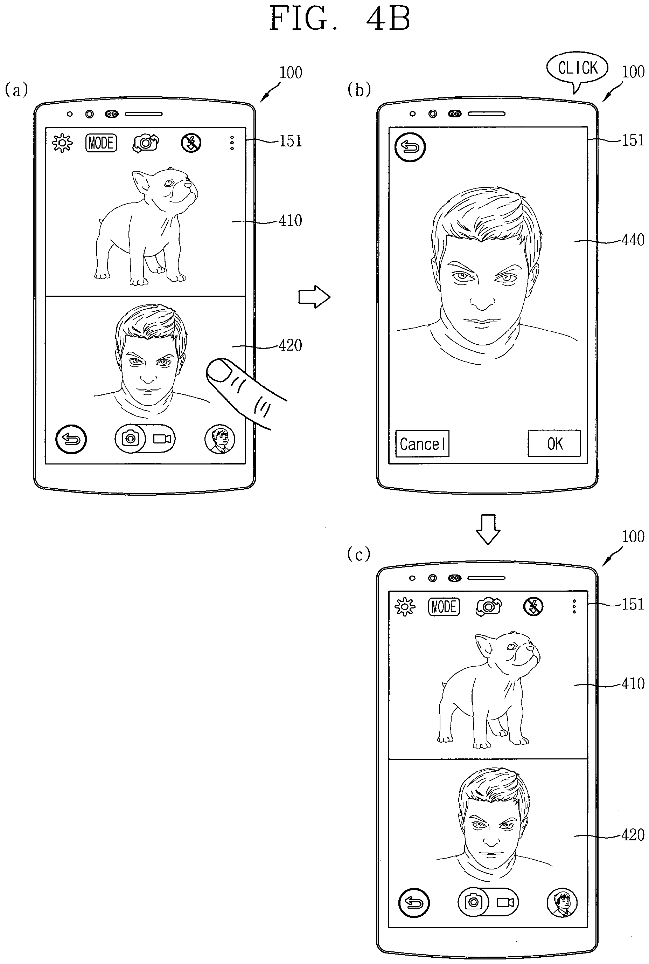

For instance, as shown in FIG. 4B(a), the controller 180 may sense a touch input applied to a region where a specific preview image 420 between preview images 410, 420 has been displayed. In this case, as shown in FIG. 4B(b), the controller 180 may capture only an image 440 corresponding to the specific preview image 420. That is, the controller 180 may capture only an image corresponding to a specific preview image displayed on a region where a touch input has been applied. With such a configuration, a user may selectively capture only a desired image, while visually recognizing images received from various capturing directions through a plurality of cameras.

Then, as shown in FIG. 4B(c), the controller 180 may re-output the preview images 410, 420 to the display unit 151.

In a case where a control command for camera capturing is continuously sensed for a preset time, the controller 180 may continuously capture images corresponding to a plurality of preview images. Here, the continuous capturing is a technique to capture a plurality of images through a single capturing command. For instance, the continuous capturing is a technique to automatically capture a plurality of images at predetermined time intervals, while a touch input corresponding to a capturing command is maintained.

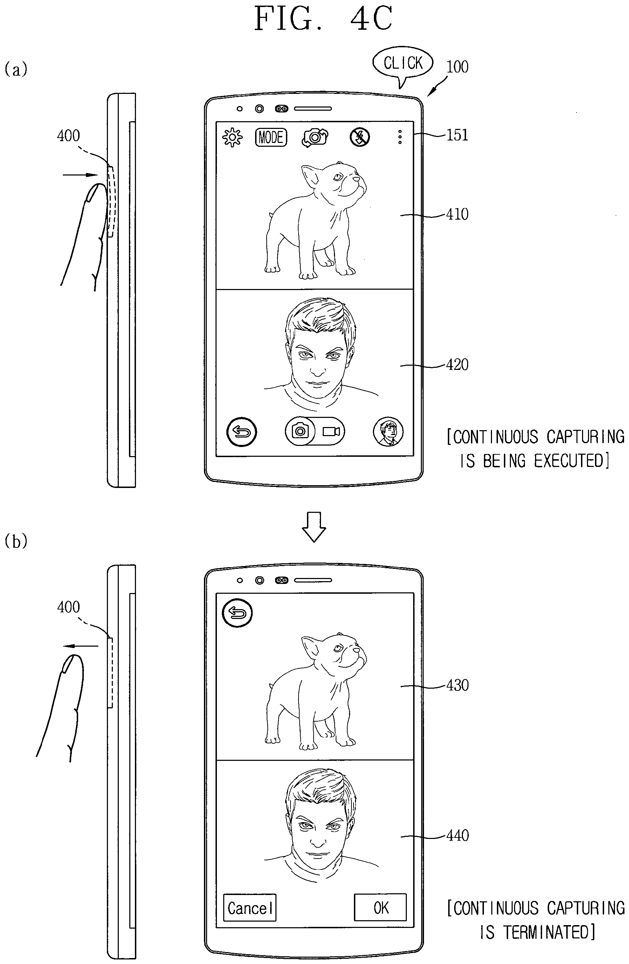

For instance, as shown in FIG. 4C(a), a control command for camera capturing may be a push input or a touch input applied to a rear input unit 400 of the mobile terminal. The controller 180 may execute a camera capturing function based on a push input or a touch input applied to the rear input unit 400.

As shown in FIG. 4C(a), after executing the camera capturing function, the controller 180 may continuously sense a push input or a touch input applied to the rear input unit 400 and sensed before the camera capturing function is executed. In this case, the controller 180 may execute a continuous capturing using the plurality of cameras.

While the continuous capturing is being executed, the controller 180 may automatically capture images at predetermined time intervals. For instance, the controller 180 may automatically capture two images per second. The number of the images to be captured may be preset when the mobile terminal is manufactured, or may be preset when an application for camera capturing is designed.

The continuous capturing may be executed until a push input or a touch input applied to the rear input unit 400 is not sensed. For instance, as shown in FIG. 4C(b), if a push input or a touch input applied to the rear input unit 400 is not sensed during a continuous capturing, the controller 180 may stop the continuous capturing.

That is, in the present invention, not only a camera function, but also an image capturing function may be executed through a single input. Thus, a user may simultaneously execute two functions through a single control input. Further, a user may continuously capture a plurality of photos in a locked state without applying an additional capturing command, thereby more precisely capturing instantaneous situations as images.

So far, has been explained a method of capturing images to capture moments.

Hereinafter, will be explained a method of setting a camera to be activated when a camera capturing function is executed in a mobile terminal according to the present invention.

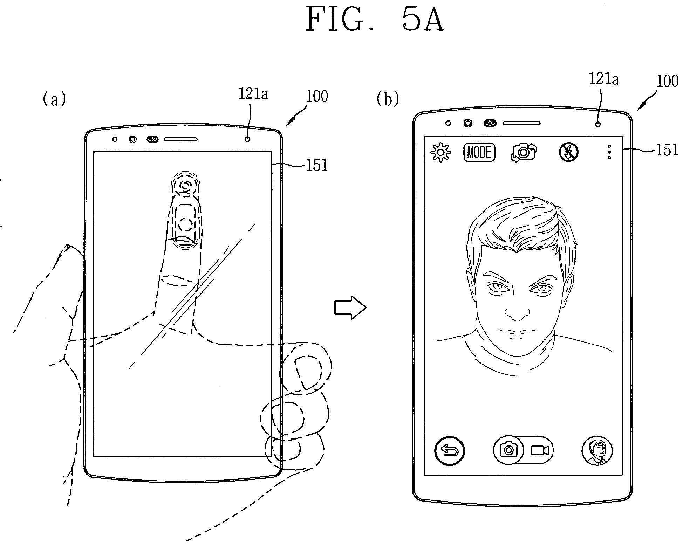

FIGS. 5A to 7B are conceptual views illustrating a method of setting a camera to be activated according to a preset condition.

In a locked state, the controller 180 may execute a camera capturing function in response to a control command for camera capturing. Once the camera capturing function is executed, the controller 180 may activate all of a plurality of cameras provided at the mobile terminal, and may output preview images received from the plurality of cameras to the display unit 151.

Alternatively, once the camera capturing function is executed, the controller 180 may activate only a specific camera among the plurality of cameras based on a preset condition, and may output a preview image received from the specific camera to the display unit 151.

The preset condition may be preset when the mobile terminal is presented out from a factory, or may be selected by a user.

The preset condition may be one of a condition related to a most-recently executed camera, a condition related to a subject's movement, a condition related to user's eyeline information, and a condition related to a movement of the terminal body.

For instance, if a most-recently activated camera is the rear camera 121b before a control command for camera capturing is received, the controller 180 may activate only the rear camera 121b for camera capturing, and may display a preview image received from the rear camera 121b on the display unit 151.

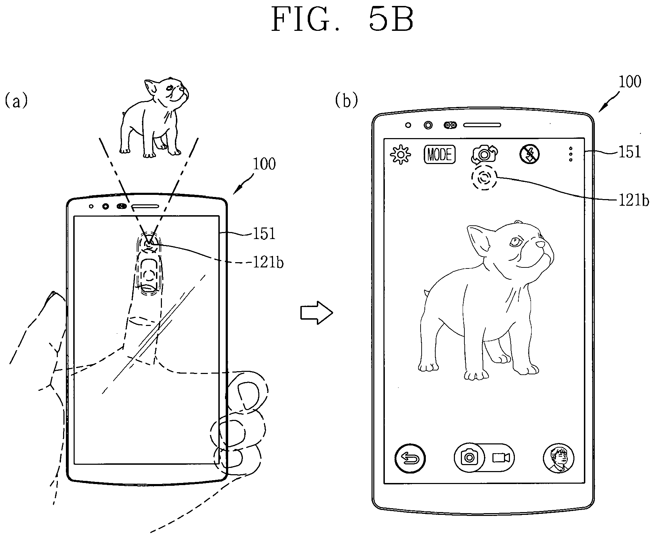

The controller 180 may select a specific camera when there is a moving subject in a capturing direction of the specific camera. For instance, as shown in FIGS. 5A(a) and 5A(b), if a facial movement is sensed in a capturing direction of the front camera 121a, the controller 180 may activate the front camera 121a. As shown in FIGS. 5B(a) and 5B(b), if a dog's movement is sensed in a capturing direction of the rear camera 121b, the controller 180 may activate the rear camera 121b. Although not shown, if moving subjects are sensed in both a capturing direction of the front camera 121a and a capturing direction of the rear camera 121b, the controller 180 may activate both of the front and rear cameras 121a, 121b.

With such a configuration, in the present invention, the controller may activate a camera having a desired capturing direction, by checking peripheral situations of the mobile terminal and a situation to be captured instantaneously.

The controller 180 may activate only a specific camera among a plurality of cameras based on a user's eyeline direction.

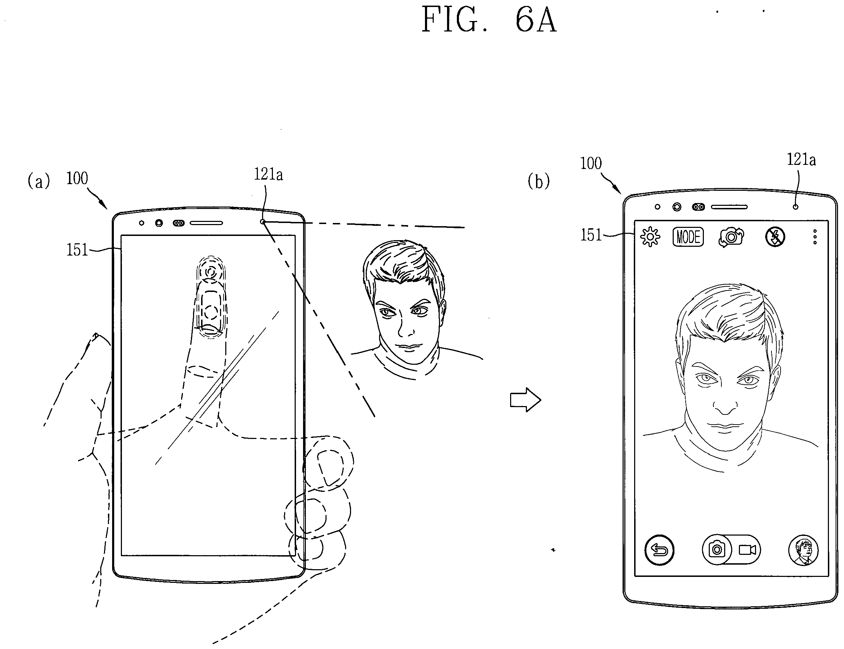

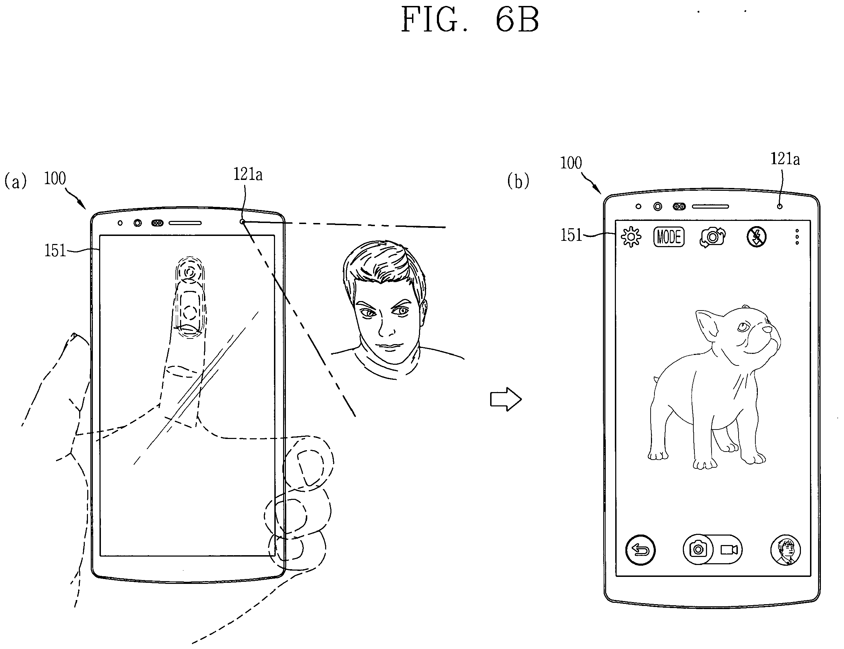

For instance, as shown in FIG. 6A(a), the controller 180 may sense that a user's eyeline is toward the front camera 121a. In this case, as shown in FIG. 6A(b), the controller 180 may activate the front camera 121a, and may display a preview image of the front camera 121a on the display unit 151. As shown in FIGS. 6B(a) and 6B(b), if a user's eyeline is not towards the front camera 121a, the controller 180 may activate the rear camera 121b having an opposite capturing direction to the front camera 121a.

The controller 180 may use the front camera 121a in order to sense a user's eyeline. For instance, the controller 180 may extract a pupil image from a facial image received from the front camera 121a, and may detect an eyeline direction based on the extracted pupil image.

With such a configuration, in the present invention, the controller may provide a proper preview image by checking a user's capturing intention in advance based on user's eyeline information.

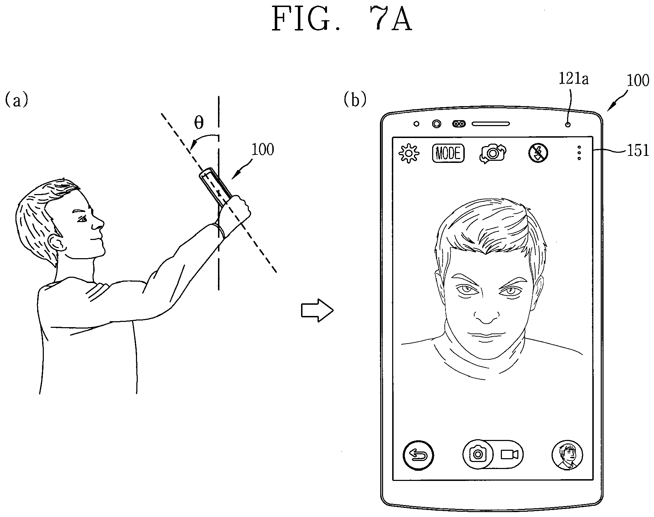

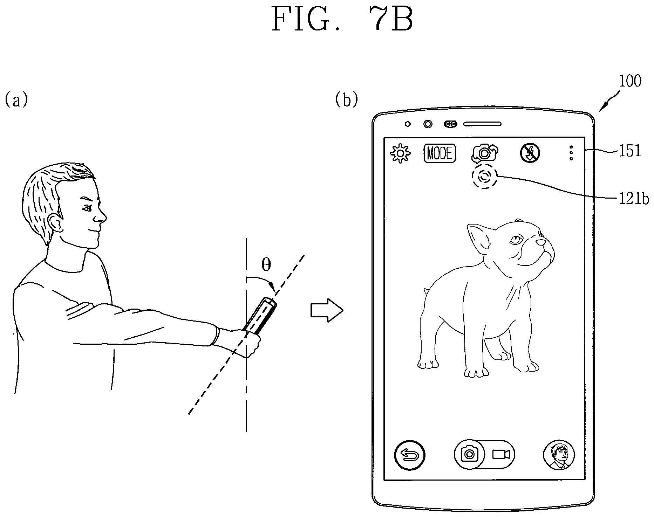

The controller 180 may activate a specific camera among a plurality of cameras, based on a condition related to a movement of the terminal body. More specifically, the controller 180 may activate a camera disposed at a position corresponding to a tilted direction of the terminal body. For instance, as shown in FIG. 7A(a), the controller 180 may sense a tilted state of the terminal body in a first direction. Here, the first direction may be a front direction of the terminal body. In this case, as shown in FIG. 7A(b), the controller 180 may activate the front camera 121a. Further, as shown in FIG. 7B(b), the controller 180 may sense a tilted state of the terminal body in a second direction, a rear direction of the terminal body. In this case, as shown in FIG. 7B(a), the controller 180 may activate the rear camera 121b.

So far, has been explained a method of activating a specific camera among a plurality of cameras according to a preset condition. With such a configuration, in the present invention, when executing a camera capturing function in a locked state, a user's capturing intention is checked to automatically activate a camera having a proper capturing direction.

Hereinafter, will be explained a method of controlling preview images received from a plurality of cameras and displayed, in a mobile terminal according to the present invention.

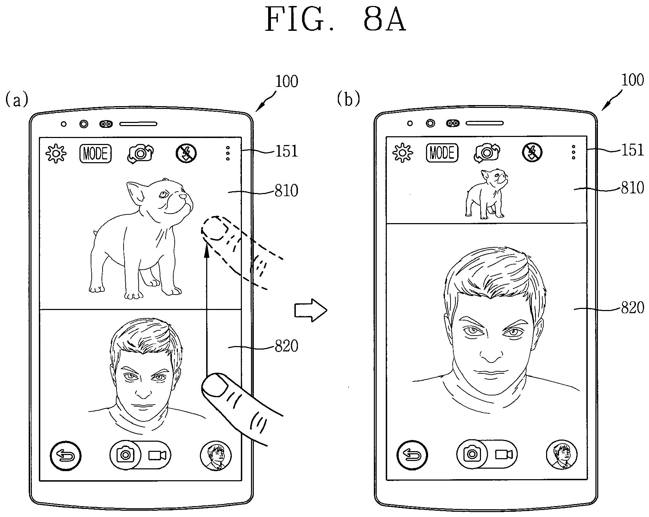

FIGS. 8A to 9B are conceptual views illustrating an embodiment related to control of method of controlling preview images.

Once the aforementioned camera capturing function is executed, the controller 180 may display a plurality of preview images received from a plurality of cameras on the display unit 151. For instance, as shown in FIG. 8A(a), once a camera capturing function is executed, a first preview image 810 received from the front camera 121a, and a second preview image 820 received from the rear camera 121b may be together displayed on the display unit 151.

A size of the plurality of preview images may be determined according to a preset condition or a user's selection.

The preset condition may be one of a condition related to a tilted direction of the terminal body, and a condition related to a subject's movement. For instance, if the terminal body is tilted in a direction where the front camera 121a is positioned, the controller 180 may display a preview image received from the front camera 121a, so as to be larger than a preview image received from the rear camera 121b. As another example, if a subject's movement is sensed in a capturing direction of the rear camera 121b, the controller 180 may display a preview image received from the rear camera 121b, so as to be larger than a preview image received from the front camera 121a. Thus, a user may easily determine a camera which is to be used to capture an image.

The controller 180 may control a display size of the preview image based on a touch input applied to the preview image. For instance, as shown in FIG. 8A(a), if a touch input is applied to a boundary region between the first and second preview images 810, 820, the controller 180 may decrease a display size of the first preview image 810. As shown in FIG. 8A(b), a display size of the second preview image 820 may be increased in correspondence to the decreased degree of the display size of the first preview image 810. That is, the display size of the first and second preview images 810, 820 may be relatively decreased or increased.

Further, the controller 180 may control an activated state of a camera by controlling a display size of a preview image. More specifically, when a display size of a preview image is decreased to a value less than a preset size, the controller 180 may deactivate a camera which has transmitted the preview image. That is, the controller 180 may deactivate the camera which has transmitted the preview image, such that an image may not be received from the camera any longer.

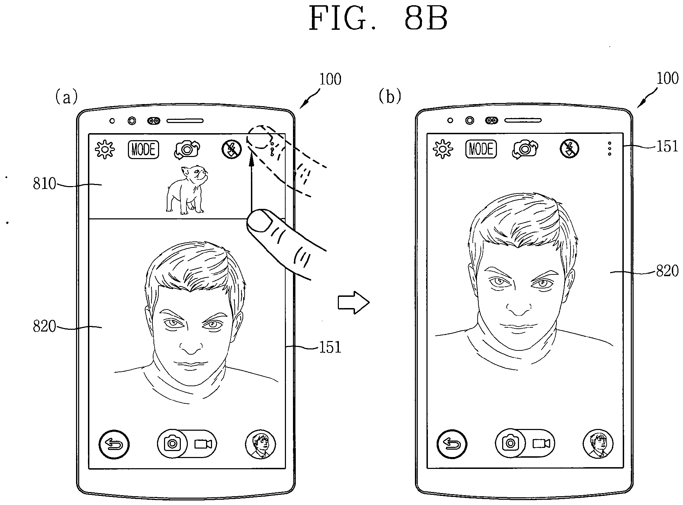

For instance, as shown in FIG. 8B(a), the controller 180 may sense that a display size of a preview image 810 is decreased to a value less than a preset size, based on a touch input. In this case, the controller 180 may deactivate the front camera 121a which has transmitted the first preview image 810. Once the front camera 121a is deactivated, the controller 180 may output the second preview image 820 on the entire region of the display unit 151.

In a displayed state of a preview image, the controller 180 may set a filter effect to an image to be captured, based on a preset type of touch input. The filter effect is a function to correct an image for a special effect by changing a chroma, a brightness, a texture, etc. of the image. The filter effect may be set in various manners according to a special effect. For instance, the filter effect may be a gray shadow effect, a sepia effect, a vintage effect, a tone reinforcement effect, a fisheye lens effect, a reversal effect, etc.

A user may apply the filter effect to a preview image before image capturing. In this case, the user may capture an image having the filter effect.

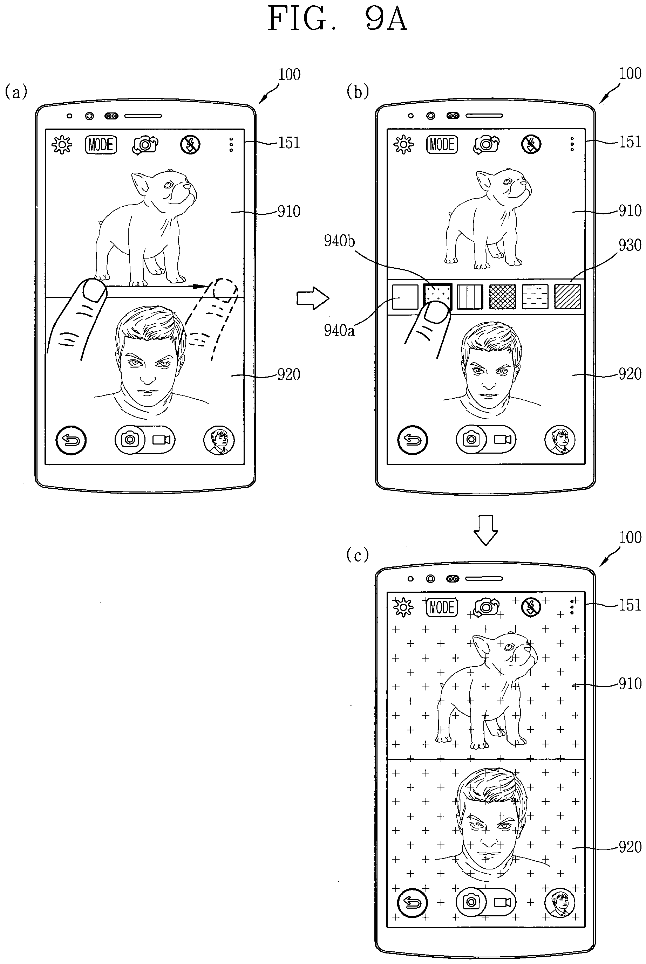

The controller 180 of the mobile terminal may preset the filter effect to a preview image before image capturing. For this, as shown in FIG. 9A(a), in a displayed state of a first preview image 910 received from the front camera 121a and a second preview image 920 received from the rear camera 121b, the controller 180 may sense a drag input applied onto a boundary region in a specific direction.

In this case, as shown in FIG. 9A(b), the controller 180 may display information 930 indicating a filter effect, on the boundary region. The information 930 indicating a filter effect may include graphic objects 940a, 940b indicating different filter effects. The graphic objects 940a, 940b indicating different filter effects may be preview images to which a filter effect has been applied.

If a touch input is applied to the graphic object 940b having a specific filter effect between the graphic objects 940a, 940b indicating different filter effects, the controller 180 may apply the specific filter effect to a preview image. That is, as shown in FIG. 9A(c), the controller 180 may apply the specific filter effect to the first and second preview images 910, 920. Once a filter effect is applied, the controller 180 may capture an image having the filter effect.

The controller 180 may apply a filter effect to all of a plurality of preview images displayed on the display unit 151, or may apply the filter effect only to a specific preview image. That is, the controller 180 may individually select some preview images from a plurality of preview images, a nd may apply different filter effects to the selected preview images.

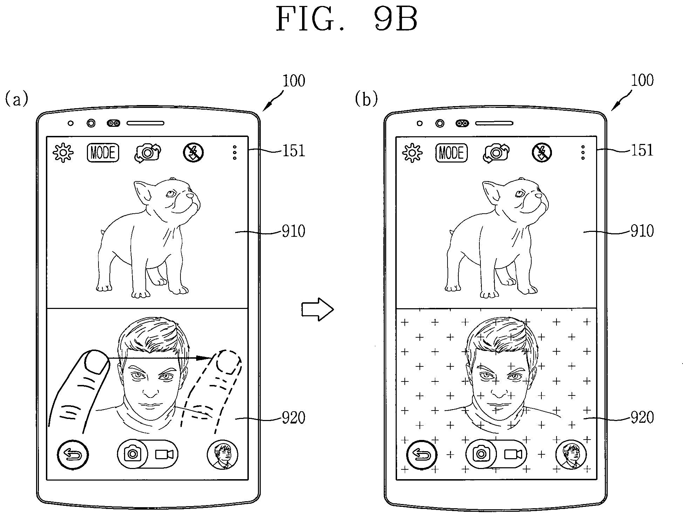

For instance, as shown in FIG. 9B(a), in a displayed state of a first preview image 910 and a second preview image 920 on the display unit 151, the controller 180 may sense a drag input applied onto a display region of the second preview image 920 in a specific direction.

In this case, as shown in FIG. 9B(b), the controller 180 may apply a specific filter effect to the second preview image 920. Here, the controller 180 may not apply the specific filter effect to the first preview image 910.

When applying the specific filter effect, the controller 180 may apply the specific filter effect in a preset order. More specifically, the controller 180 may sequentially apply a plurality of filter effects in a preset order, according to the number of times that a drag input has been applied.

Although not shown, in response to a drag input applied to a display region of the first preview image 910 in a specific direction, the controller 180 may apply a filter effect to the first preview image 910 in an independent manner from the second preview image 920.

So far, has been explained a method of controlling a preview image after executing a camera capturing function, in a mobile terminal according to the present invention. Hereinafter, will be explained a method of storing images captured through a camera capturing function in a mobile terminal according to the present invention.

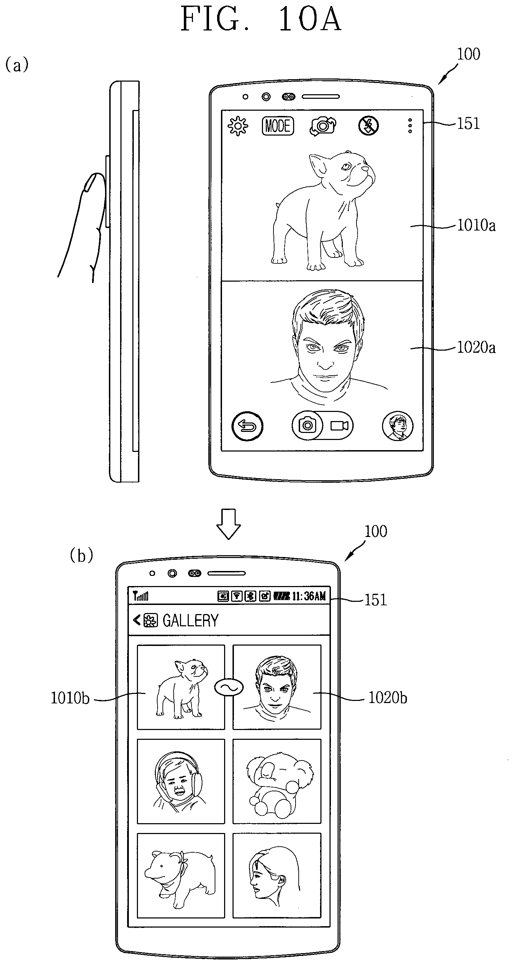

FIGS. 10A to 10D are conceptual views illustrating a method of storing images captured through a camera capturing function.

After executing a camera capturing function, the controller 180 may capture images automatically or in response to a capturing command.

For instance, as shown in FIG. 10A(a), if a capturing command is applied in a displayed state of a first preview image 1010a and a second preview image 1020a on the display unit 151, the controller 180 may capture a first image corresponding to the first preview image 1010a and a second image corresponding to the second preview image 1020a.

Then, in response to a control command for outputting the captured images, the controller 180 may output the captured images, and images stored in the memory 170. For instance, as shown in FIG. 10A(a), in response to a push input applied to an upper region of the rear input unit, the controller 180 may output the captured images and images stored in the memory 170, to the display unit 151. That is, as shown in FIG. 10A(b), the controller 180 may output a first image 1010b corresponding to the first preview image 1010a and a second image 1020b corresponding to the second preview image 1020a, the first and second images stored in the memory 170.

In a case where the first image 1010b and the second image 1020b are images captured simultaneously, the controller 180 may display the first and second image 1010b, 1020b so as to be distinguished from other images. For instance, as shown in FIG. 10A(b), the controller 180 may display a guide object indicating that the first and second images 1010b, 1020b have been simultaneously captured, on the first and second images 1010b, 1020b.

Although not shown, the controller 180 may store one of the first and second images 1010b, 1020b, using the guide object. Thus, a user may selectively store only a desired image among images captured simultaneously.

In the present invention, since images of different directions are simultaneously captured through a single control command, a moment may be captured. Further, a user may later check the images captured in different directions, in a visual manner.

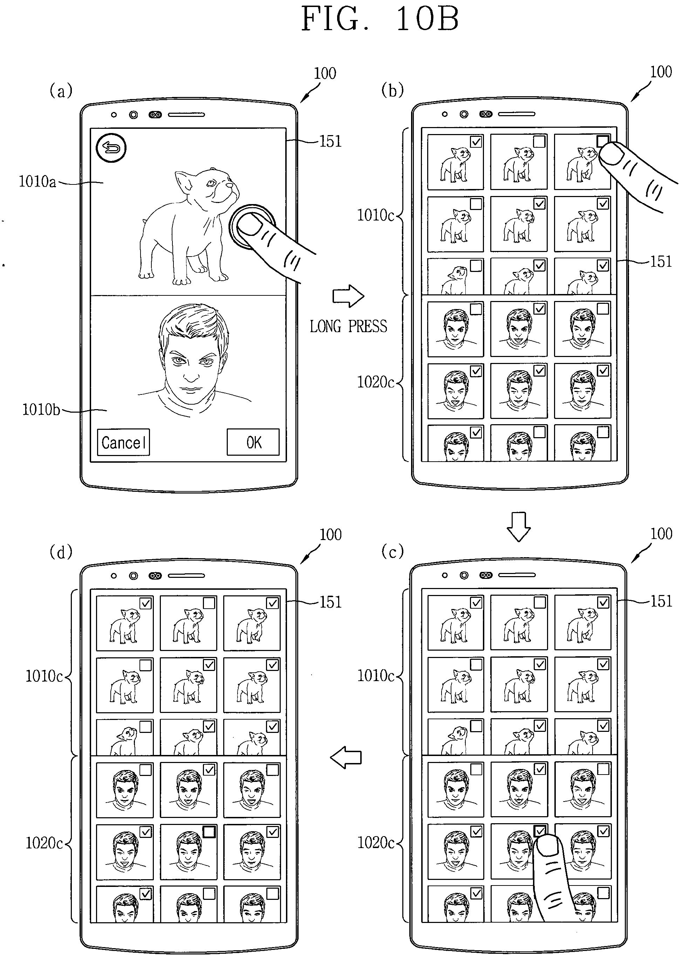

After executing a camera capturing function, the controller 180 may execute a continuous capturing. Then, the controller 180 may output a plurality of images captured consecutively to the display unit 151 according to a user's request. For instance, as shown in FIG. 10B(a), after a continuous capturing is terminated, the controller 180 may sense a long touch input. In this case, as shown in FIG. 10B(b), the controller 180 may output images 1010c, 1020c captured consecutively to the display unit 151.

After the continuous capturing is terminated, the controller 180 may store all images captured consecutively in the memory 170, or may selectively store some of the images captured consecutively in the memory 170.

In case of selectively storing some of the images captured consecutively, the controller 180 may detect images recommended so as to be stored in the memory 170 among the images 1010c, 1020c captured consecutively. Then, as shown in FIG. 10B(a), the controller 180 may display mark icons on the recommended images in an overlapped manner, such that the recommended images among the consecutively-captured images 1010c, 1020c may be distinguishable from other images.

The recommended images may be moving images. For the recommended images, the controller 180 may detect images determined to have moved based on a reference image among consecutively-captured images, through an image analysis. Here, the reference image may be a firstly-captured image, an intermediate image among consecutively-captured images, or an image having a clearest subject among consecutively-captured images. With such a configuration, only moving images among consecutively-captured images may be selectively stored, without a user's direct selection for images. This may allow a user to selectively store only images determined to have different motions at the time of a continuous capturing.

The recommended images may be determined according to a tilted angle of the terminal body at the time of a continuous capturing. For instance, when the terminal body is tilted in a direction of the front camera 121a, the recommended images may be images captured by the front camera 121a.

The controller 180 may store images selected by a user as well as the recommended images, in the memory 170. For instance, as shown in FIG. 10B(b), in response to a touch input applied to a display region of a specific image 1030 among the images 1010c, 1020c captured consecutively, the controller 180 may select the specific image 1030 as an image to be stored in the memory 170. In this case, as shown in FIG. 10B(c), a mark icon may be displayed on the specific image 1030 in an overlapped manner.

The controller 180 may set part of the recommended images not to be stored in the memory 170 according to a user's selection. For instance, as shown in FIG. 10B(c), in response to a touch input applied to a display region of a specific image 1040 among the recommended images having mark icons, the controller 180 may control the specific image 1040 not to be stored in the memory 170. In this case, as shown in FIG. 10B(d), the mark icon on the specific image 1040 may disappear.

The controller 180 may select a plurality of images among images 1010c, 1020c captured consecutively, as images to be stored or not to be stored in the memory 170, based on a touch pattern corresponding to a touch path.

In this case, the controller 180 may select images to be stored in the memory 170, or may determine images not to be stored in the memory 170, based on a shape of a touch pattern corresponding to a touch path.

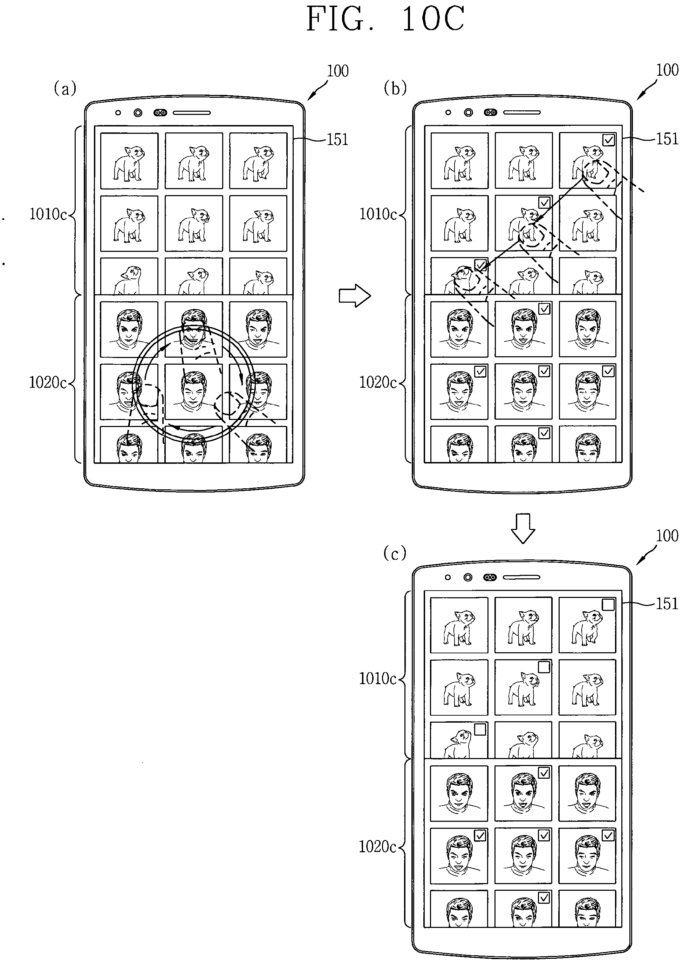

For instance, as shown in FIG. 10C(a), the controller 180 may sense a circular pattern corresponding to a touch path, on a display region of a plurality of second images 1020c among images 1010c, 1020c captured consecutively. In this case, as shown in FIG. 10C(b), the controller 180 may select the plurality of second images 1020c displayed on regions to which the circular pattern has been applied and displayed in the circular pattern, as images to be stored in the memory 170. In this case, mark icons may be displayed on the plurality of second images 1020c in an overlapped manner.

As shown in FIG. 10C(b), the controller 180 may sense a linear pattern corresponding to a touch path, on a display region of a plurality of first images 1010c among the images 1010c, 1020c captured consecutively. In this case, as shown in FIG. 10C(c), the controller 180 may select the plurality of first images 1010c displayed on regions to which the linear pattern has been applied, as images not to be stored in the memory 170. In this case, the mark icons displayed on the plurality of first images 1010c in an overlapped manner may disappear.

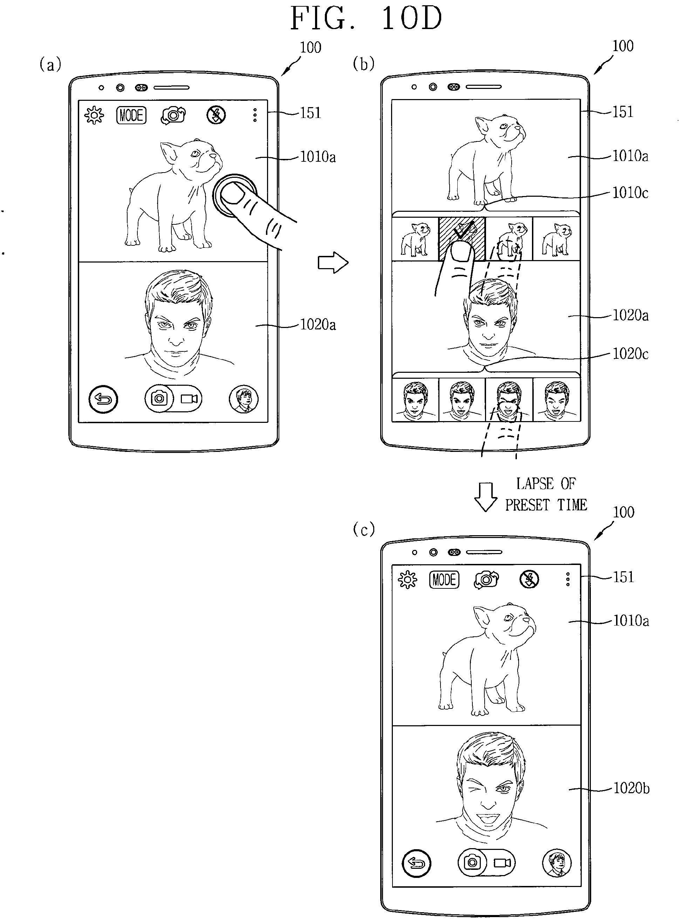

As shown in FIGS. 10D(a) and 10D(b), the controller 180 may display images 1010c, 1020c captured consecutively, on preview images in an overlapped manner, in response to a user's request or after a continuous capturing is terminated.

If touch inputs are applied to the consecutively-captured images 1010c, 1020c, the controller 180 may selectively store only images displayed on regions where the touch inputs have been applied. On the other hand, if no touch input is applied to the consecutively-captured images 1010c, 1020c, the controller 180 may store all of the consecutively-captured images 1010c, 1020c in the memory 170.

Further, as shown in FIG. 10D(c), if a touch input to the consecutively-captured images 1010c, 1020c is not sensed for a predetermined time, the controller 180 may control the consecutively-captured images 1010c, 1020c to disappear from the display unit 151. And the controller 180 may store all or part of the consecutively-captured images 1010c, 1020c in the memory 170.

Once the consecutively-captured images 1010c, 1020c disappear, the controller 180 may re-display preview images on the display unit 151. This may allow a user to perform image re-capturing after storing images, without an additional control input.

So far, have been explained various methods of storing images captured through a camera capturing function.

Hereinafter, will be explained various embodiments to execute a camera capturing function in a mobile terminal according to the present invention.

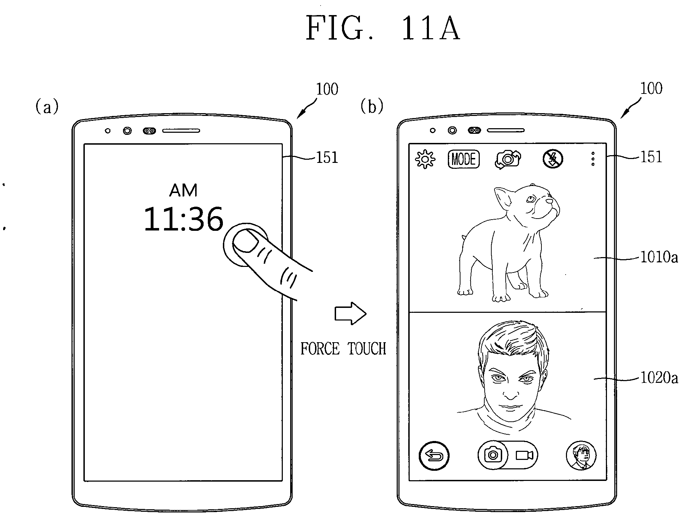

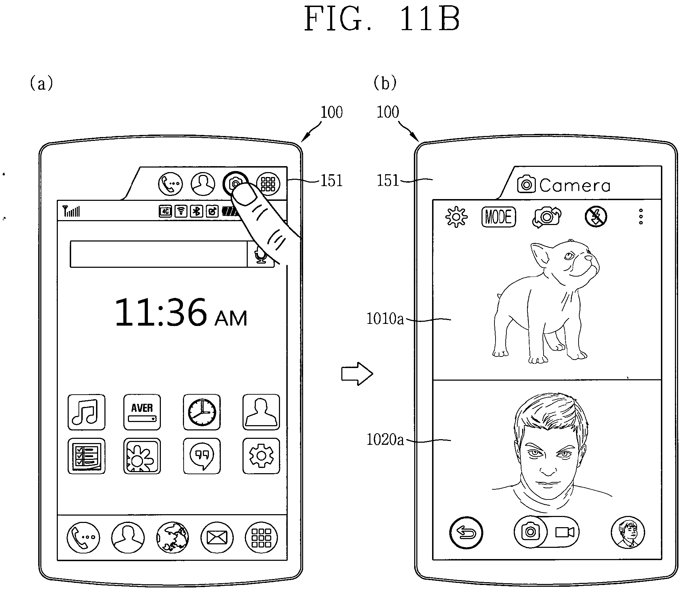

FIGS. 11A and 11B are conceptual views illustrating different embodiments to execute a camera capturing function, in a mobile terminal according to the present invention.

In a locked state, the controller 180 may receive a control command for camera capturing in various manners.

For instance, as shown in FIG. 11A(a), the controller 180 may execute a camera capturing function, in response to a preset type of touch input applied while an always on display (AOD) function is being executed.

The AOD function is a function to turn on light of one region of the display unit 151 such that video information is displayed on the one region of the display region in an off-state of the display unit 151. That is, as shown in FIG. 11A(a), in an off state of light of the display unit 151, the date information, time information, etc. may be briefly displayed on one region of the display unit 151. Such an AOD function may be referred to as an 'always on' function.

The AOD function may be set by a user, and may be screen information separated from a lock screen indicating a locked state.

The preset type of touch input may be a long touch, a force touch, etc. The force touch may be a touch input applied to the display unit 151 in a thickness direction with a force more than a predetermined level. As shown in FIG. 11A(b), if a force touch is applied while an AOD function is being executed, the controller 180 may convert the display unit 151 from a deactivated state into an activated state, and may display a plurality of preview images received from a plurality of cameras on the display unit 151.

As another example, as shown in FIG. 11B, when the mobile terminal is provided with a main display and a sub display, a user may execute a camera capturing function using an icon for a camera capturing function displayed on the sub display. Here, the main display is a display which occupies most of an area of a front surface of the terminal body, which means a display to display an application being driven in the mobile terminal or driving information. The sub display extends from the main display, and has a smaller size than the main display. The sub display means a display which occupies one region of the front surface of the terminal body, which may display thereon a web favorite (bookmark) icon, a notification icon, a shortcut icon, etc.

Even if the main display is turned off, the sub display may be always turned on due to the aforementioned AOD function. In this case, as shown in FIG.11B(a), although light of the display unit is turned off, an icon for a camera capturing function may be displayed on the sub display.

A user may execute a camera capturing function by selecting the icon for a camera capturing function displayed on the sub display. In this case, as shown in FIG. 11B(b), the controller 180 may turn on the main display to display preview images.

So far, have been explained various embodiments to execute a camera capturing function. In the present invention, a camera capturing function may be executed through various inputs as well as the aforementioned method.

Hereinafter, will be explained a method of executing a camera capturing function based on image information received from an external camera, in a mobile terminal according to the present invention.

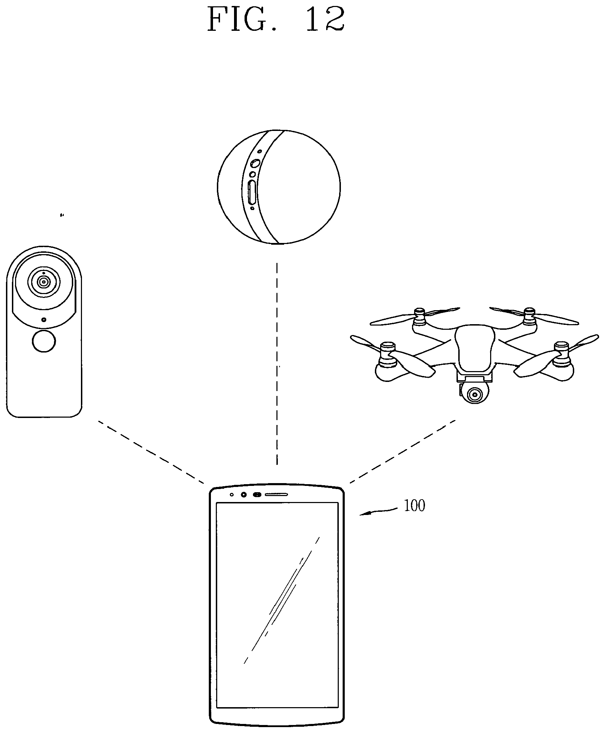

FIGS. 12 to 14B are conceptual views illustrating a method of executing a camera capturing function using image information received from an external camera.

Referring to FIG. 12, the mobile terminal 100 according to the present invention may transceive (transmit and receive) information with external devices through wired or wireless communication. For instance, the mobile terminal 100 may execute short-distance communication with external devices via Bluetooth.

Such external devices may be electronic devices each having a communication unit. For instance, the external devices may be a flyable terminal (e.g., a drone), a rotatable terminal (e.g., a rolling bot), a terminal which can capture image capturing at 360°(e.g, a 360-camera).

In case of short-distance communication with one or more external devices, the controller 180 may receive image information from the external devices through communication. In a state where image information can be received from the external devices, the controller 180 may execute a camera capturing function.

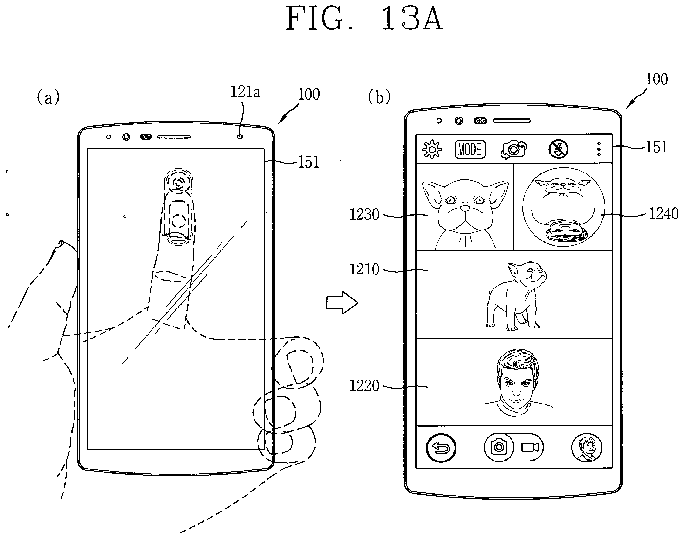

In this case, as shown in FIGS. 13A(a) and 13A(b), the controller 180 may simultaneously display, on the display unit 151, preview images 1210, 1220 received through cameras of the mobile terminal, and preview images 1230, 1240 received from the external devices.

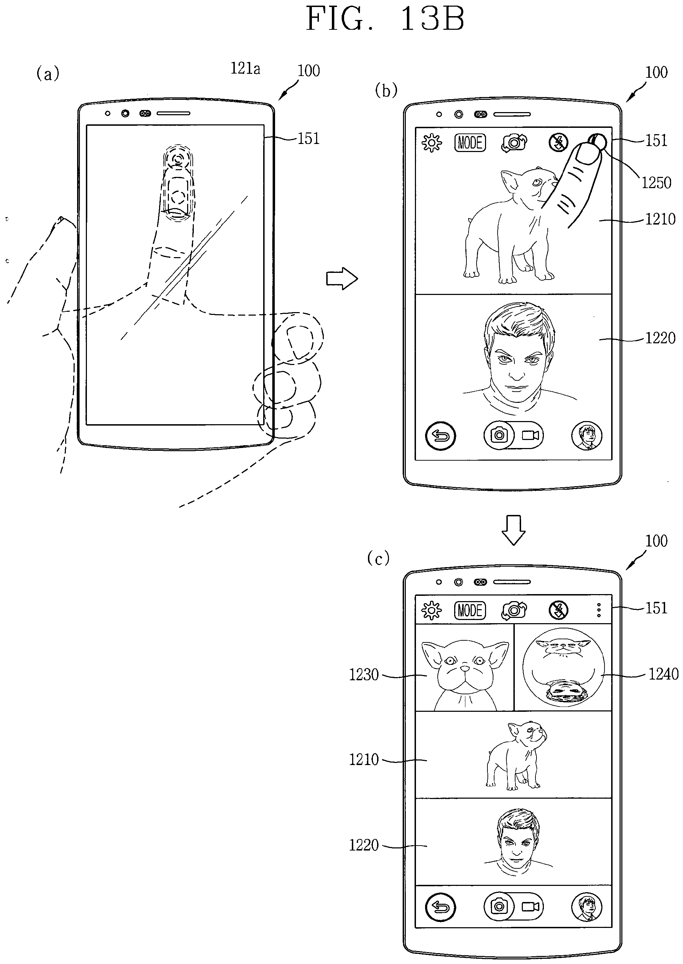

Alternatively, as shown in FIGS. 13B(a) and 13B(b), once a camera capturing function is executed, the controller 180 may display an icon 1250 on preview images 1210, 1220, the icon indicating that image information can be received from the external devices. In this case, as shown in FIG. 13B(c),as the icon 1250 is selected, the controller 180 may simultaneously display, on the display unit 151, preview images 1210, 1220 received through cameras of the mobile terminal, and preview images 1230, 1240 received from the external devices.

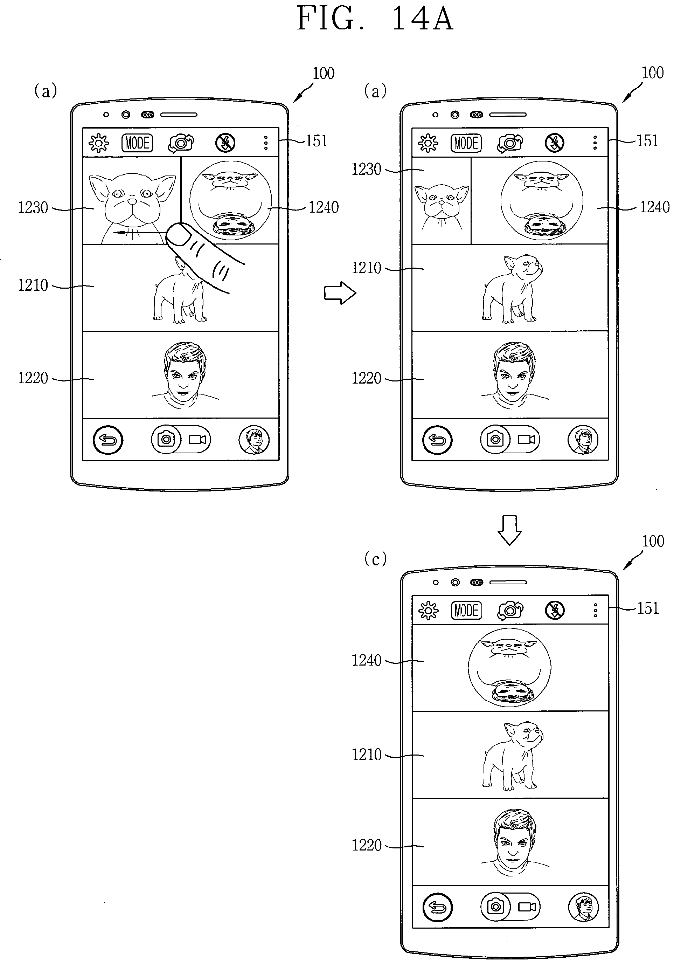

Further, the controller 180 may release a communication state with an external device, by controlling a size of a preview image. For instance, as shown in FIG. 14A(a), if a user applies a touch input to a display region of a first preview image 1230 received from a first external device, the controller 180 may reduce a size of the first preview image 1230. If the size of the first preview image 1230 is reduced to a value less than a preset size as shown in FIG. 14A(b), the controller 180 may release a communication state between the mobile terminal and the first external device. In this case, as shown in FIG. 14A(c), the first preview image 1230 may not be output to the display unit 151 any longer.

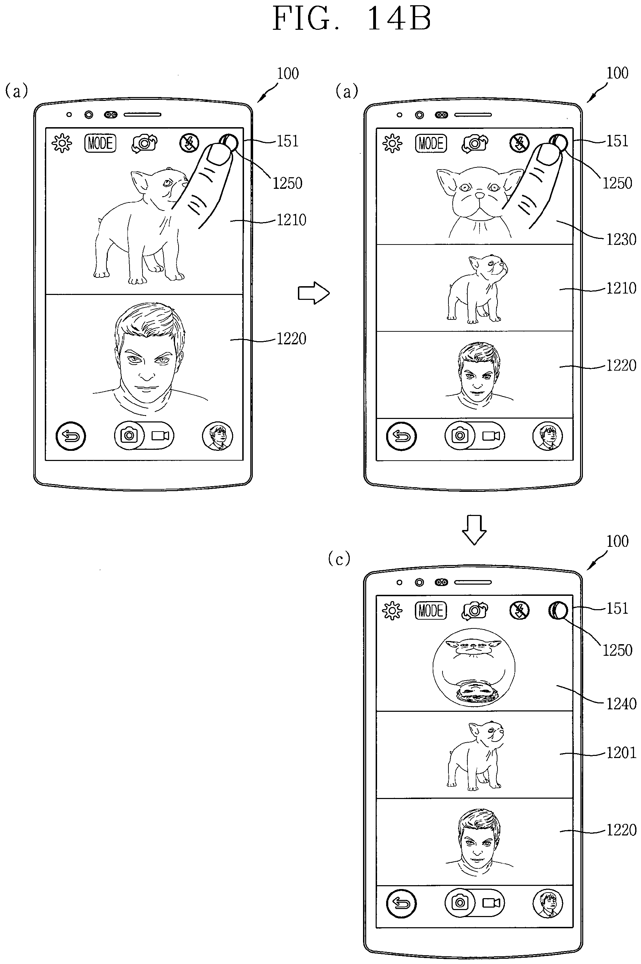

In a case where the mobile terminal communicates with two or more external devices, the controller 180 may sequentially output preview images received from the two or more external devices according to a user's request. For instance, as shown in FIG. 14B(a), when the mobile terminal is connected to two or more external devices, the controller 180 may display an icon 1250 on preview images, the icon for outputting an image received from an external terminal. As shown in FIG. 14B(b), when a touch input is applied to the icon 1250, the controller 180 may display, on the display unit 151, a preview image 1230 received from a first external device of two external devices. Then, as shown in FIG. 14B(c), when a touch input is re-applied to the icon 1250, the controller 180 may display, on the display unit 151, a preview image 1240 received from a second external device, rather than the preview image 1230 received from the first external device. That is, the controller 180 may sequentially output preview images received from external devices.

With such a configuration, the controller 180 may simultaneously capture a plurality of images, based on image information received through external cameras provided at external devices. So far, has been explained a method of providing preview images received through external cameras provided at external devices.

The mobile terminal according to the present invention may have the following advantages.

Firstly, if a control command for immediately activating a camera is applied in a locked state of the mobile terminal, preview images captured by a plurality of cameras having different capturing directions may be together displayed on the display unit. With such a configuration, for instantaneous capturing, an image may be captured through a camera having a direction where a subject exists, as a capturing direction.

Further, in the present invention, an image may be captured by activating a camera having a proper capturing direction according to a user's intention. With such a configuration, a user may capture an instantaneous image by rapidly activating a camera having a proper capturing direction, without additionally selecting a capturing direction with respect to cameras having different capturing directions.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100), comprising:
a terminal body;
a plurality of cameras (121a, 121b) disposed on different regions of the terminal body in a spaced manner, and having different capturing directions;
a display unit (151) configured to display video information; and
a controller (180) configured to execute a different control operation in response to a different input applied in a locked state where reception of a user's input is limited,
wherein the controller (180) displays a lock screen indicating a locked state, based on a first input received in the locked state, and
wherein the controller (180) displays a plurality of preview images received from the plurality of cameras (121a, 121b), on the display unit (151), based on a second input received in the locked state.

2. The mobile terminal of claim 1, wherein the plurality of cameras (121a, 121b) include:
a first camera (121a) disposed on a front surface of the terminal body, and having a first capturing direction; and
a second camera (121b) disposed on a rear surface of the terminal body, and having a second capturing direction, and
wherein the controller (180) simultaneously displays preview images received from the first and second cameras when the second input is received.

3. The mobile terminal of claim 1 or 2, wherein in a state of displaying a plurality of preview images on the display unit (151), the controller (180) simultaneously captures the plurality of preview images in response to a touch input received on an arbitrary region of the display unit (151).

4. The mobile terminal of any one of claims 1 to 3, further comprising a motion sensor configured to sense a movement of a subject,
wherein when the second input is applied, the controller (180) displays, on the display unit (151), a preview image of a specific camera among the plurality of cameras (121a, 121b) which is disposed in a direction where a movement of a subject has been sensed.

5. The mobile terminal of any of the preceding claims, further comprising an eyeline sensor configured to sense a user's eyeline,
wherein when the second input is applied, the controller (180) displays, on the display unit (151), a preview image of a specific camera among the plurality of cameras (121a, 121b), based on a user's eyeline direction.

6. The mobile terminal of claim 5, wherein when the user's eyeline direction is toward a specific camera, the controller (180) displays a preview image of the specific camera on the display unit (151), and
wherein when the user's eyeline direction is not toward a specific camera, the controller (180) displays, on the display unit (151), a preview image of another camera positioned on an opposite side to the specific camera among the plurality of cameras (121a, 121b).

7. The mobile terminal of any of the preceding claims, further comprising a gradient sensor configured to sense a gradient of the terminal body,
wherein the controller (180) displays, on the display unit (151), a preview image of a specific camera among the plurality of cameras (121a, 121b) which is disposed in a direction where the terminal body has been tilted.

8. The mobile terminal of any of the preceding claims, wherein in a state of displaying a plurality of preview images on the display unit (151), if a touch input is applied to a boundary region between the preview images, the controller (180) changes a display size of the plurality of preview images.

9. The mobile terminal of claim 8, wherein when a display size of a preview image among the plurality of preview images is decreased to a value less than a preset size, the controller (180) controls a camera which has transmitted the preview image, such that image information is not received from the camera which has transmitted the preview image.

10. The mobile terminal of claim 1, wherein when preview images are captured by the plurality of cameras (121a, 121b), the controller (180) displays the captured preview images on the display unit (151), and
wherein the controller (180) displays a guide object on at least one recommended image among the captured preview images, in an overlapped manner.

11. The mobile terminal of claim 10, wherein for the recommended image, the controller (180) detects images determined to have moved based on a reference image among the captured preview images, through an image analysis.

12. The mobile terminal of claim 1, wherein when the plurality of preview images are simultaneously captured, the controller (180) stores the plurality of captured preview images in a memory, and
wherein in a case where images stored in the memory are output to the display unit (151), the controller (180) displays the plurality of captured preview images so as to be visually-distinguishable from other images stored in the memory, in order to indicate that the plurality of preview images have been simultaneously captured.

13. The mobile terminal of claim 12, wherein the controller (180) displays a guide object indicating that the plurality of preview images have been simultaneously captured, in an overlapped manner, on display regions of the plurality of preview images.

14. The mobile terminal of claim 1, further comprising a wireless communication unit configured to receive an image from an external camera through communication,
wherein when the second input is received, the controller (180) receives a preview image of the external camera through the wireless communication unit, and displays the preview image of the external camera together with the plurality of preview images received from the plurality of cameras (121a, 121b).

15. The mobile terminal of claim 14, wherein if a display size of the preview image of the external camera is reduced to a value less than a preset size, the controller (180) releases a communication connection state with the external camera.
